# EUROPEAN PATENT APPLICATION

(11) **EP 4 518 409 A1**
(43) Date of publication of application: **05.03.2025**
(21) Application number: 23795298.1
(22) Date of filing: 23.04.2023
(51) Int. Cl.: H04W 24/08, H04W 72/04, H04W 36/30

(54) **LINK RECOVERY METHOD AND APPARATUS, DEVICE, AND STORAGE MEDIUM**

(30) Priority: 26.04.2022 CN 202210451477
(71) Applicant: Datang Mobile Communications Equipment Co., Ltd., Beijing 100085 (CN)
(72) Inventor: YAN, Nan, Beijing 100085 (CN); ZHAO, Yali, Beijing 100085 (CN)
(74) Representative: Studio Torta S.p.A.
(86) International application number: PCT/CN2023/090146
(87) International publication number: WO 2023/207865

(57) **Abstract**

A link recovery method, apparatus, device and storage medium are provided. The method includes: obtaining a sidelink early measurement report (SL-EMR) measurement result in a non-connected state; sending the SL-EMR measurement result to a corresponding network side to perform a link recovery in a connected state. This method obtains the SL-EMR measurement result when the UE is in a non-connected state, and reports the SL-EMR measurement result to the corresponding network side when entering a connected state, so that the UE does not need to perform EMR measurements of SL-related nodes before link recovery with the corresponding network side is required, thereby saving the time for the UE to re-acquire the SL-EMR measurement result after entering a connected state, and enabling rapid link recovery in multi-path/multi-connection scenarios.

## Description

### TECHNICAL FIELD

The present disclosure relates to the field of communication technology, and in particular to a link recovery method, device, equipment and storage medium.

### BACKGROUND

In order to expand network coverage, when the UE (User Equipment) has a poor signal in a cell, it can consider connecting to a relay UE to continue the connection and data transmission in the current cell. The relay UE itself is a terminal with relay function. The UE connected to the network through the relay UE is a remote UE.

For UE-to-network relay (i.e., U2N relay), the sidelink direct communication interface is used between the relay UE and the remote UE, and the Uu link (air interface link) is used between the relay UE and the network/base station. The sidelink of R17 only allows the remote UE to access the network side through a single link connection of a single relay UE. R18 introduces a multi-path scenario, that is, the remote UE can access the network side through one to multiple relay UEs and a direct Uu link to improve the reliability and peak rate of the remote UE's access to the network. R18 currently only allows multiple paths to access the same base station. In the future, it may allow multiple paths to access different base stations, that is, multiple connections, to achieve multi-path/multi-connection scenarios.

Since the multi-path/multi-connection scenario involves the sidelink direct communication interface and the Uu port, the current link recovery solution cannot achieve fast link recovery in this scenario, which limits the peak rate. Therefore, it is necessary to provide a fast link recovery solution for the multi-path/multi-connection scenario.

### SUMMARY

The purpose of the present disclosure is to solve at least one of the above-mentioned technical defects to a certain extent, and the embodiments of the present disclosure provide the following technical solutions.

In a firs aspect, a link recovery method is in an embodiment of the present disclosure, applied to a user equipment (UE) side, including:
obtaining a sidelink early measurement report (SL-EMR) measurement result in a non-connected state;
sending the SL-EMR measurement result to a corresponding network side to perform a link recovery in a connected state.

In some embodiment of the present disclosure, the method further includes:
receiving multi-path link configuration information which is sent by the network side based on the SL-EMR measurement result, and performing the link recovery based on the multi-path link configuration information.

In some embodiment of the present disclosure, the method further includes:
receiving SL-EMR measurement configuration information sent by the network side, before entering into the non-connected state;
the obtaining the SL-EMR measurement result in the non-connected state includes:
obtaining the SL-EMR measurement result based on the SL-EMR measurement configuration information in the non-connected state.

In some embodiment of the present disclosure, the SL-EMR measurement configuration information includes one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

In some embodiment of the present disclosure, the SL-EMR measurement object information includes identification information of at least one preset relay UE, and the preset relay UE indicated by the identification information of the preset relay UE is measured preferentially.

In some embodiment of the present disclosure, the obtaining the SL-EMR measurement result based on the SL-EMR measurement configuration information in the non-connected state includes:
obtaining the SL-EMR measurement result based on the SL-EMR measurement configuration information before the SL-EMR measurement time timer expires, if the SL-EMR measurement configuration information includes the SL-EMR measurement time timer length information;
obtaining the SL-EMR measurement result based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not include the SL-EMR measurement time timer length information.

In some embodiment of the present disclosure, the method further includes:
receiving a relay discovery instruction sent by the network side, before entering into the non-connected state;
the obtaining the SL-EMR measurement result in the non-connected state includes:
executing the relay discovery instruction and measuring the discovered relay UE, and taking a measurement result as the SL-EMR measurement result in the non-connected state.

In some embodiment of the present disclosure, the sending the SL-EMR measurement result to the corresponding network side in the connected state includes:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

In some embodiment of the present disclosure, the method further includes:
resending, when accessing a new cell, the SL-EMR measurement result to the corresponding network side in the new cell, if a handover or re-establishment occurs during a process of sending the SL-EMR measurement result to the corresponding network side.

In some embodiment of the present disclosure, the performing the link recovery based on the multi-path link configuration information comprises:
establishing a PC5 interface connection with the relay UE indicated by the multi-path link configuration information.

In some embodiment of the present disclosure, the method further includes:
sending SL-EMR measurement support indication information to the network side, before entering into the non-connected state.

In a second aspect, a link recovery method is in an embodiment of the present disclosure, applied to a network side, including:
receiving a sidelink early measurement report (SL-EMR) measurement result sent by the UE, when a UE enters into a connected state;
determining, if it is determined based on the SL-EMR measurement result that a multi-path link is to be configured, corresponding multi-path link configuration information based on the SL-EMR measurement result, and sending the multi-path link configuration information to the UE, to enable the UE to perform a link recovery based on the multi-path link configuration information.

In some embodiment of the present disclosure, the method further includes:
sending SL-EMR measurement configuration information to the UE before entering into the non-connected state, to enable the UE to obtain the SL-EMR measurement result based on the SL-EMR measurement configuration information when the UE is in a non-connected state.

In some embodiment of the present disclosure, the sending SL-EMR measurement configuration information to the UE includes:
carrying the SL-EMR measurement configuration information in a dedicated signaling to send the SL-EMR measurement configuration information to the UE; and/or,
carrying the SL-EMR measurement configuration information in system information to send the SL-EMR measurement configuration information to the UE.

In some embodiment of the present disclosure, the dedicated signaling includes a radio resource control (RRC) connection release message or an RRC reconfiguration message.

In some embodiment of the present disclosure, the system information includes a system information block (SIB) message shared with a Uu-link early measurement report (Uu-EMR) measurement or a separate SIB message.

In some embodiment of the present disclosure, the SL-EMR measurement configuration information is obtained by:
obtaining a relay-related measurement configuration;
obtaining the SL-EMR measurement configuration information based on the relay-related measurement configuration and a network-related measurement configuration.

In some embodiment of the present disclosure, the obtaining the relay-related measurement configuration includes one of the following methods:
sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

In some embodiment of the present disclosure, when the SL-EMR measurement configuration information is carried in an RRC connection release message and sent to the UE, the obtaining the SL-EMR measurement configuration information based on the relay-related measurement configuration and the network-related measurement configuration includes:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

In some embodiment of the present disclosure, the method further includes:
sending a relay discovery instruction to the UE before entering into the non-connected state, to enable the UE to execute the relay discovery instruction and measure a discovered relay node when the UE is in the non-connected state, and taking a measurement result as the SL-EMR measurement result.

In an optical embodiment of the present disclosure, the sending the SL-EMR measurement configuration information to the UE, includes:
sending the relay discovery instruction to the UE via a dedicated signaling carrying the relay discovery instruction; and/or sending the relay discovery instruction to the UE via system information carrying the relay discovery instruction.

In an optical embodiment of this disclosure, the dedicated signaling is a Radio Resource Control (RRC) connection release message or RRC reconfiguration message.

In an optical embodiment of this disclosure, the system information is a system information block (SIB) message shared with a Uu-link early measurement report (Uu-EMR) measurement or a separate SIB message.

In a third aspect, a user equipment (UE) is in an embodiment of the present disclosure, including a memory, a transceiver, and a processor, where
the memory is configured to store a computer program; a transceiver is configured to send and receive data under a control of the processor; and a processor is configured to read the computer program in the memory to perform:
obtaining a sidelink early measurement report (SL-EMR) measurement result in a non-connected state;
sending the SL-EMR measurement result to a corresponding network side to perform a link recovery in a connected state.

In some embodiment of the present disclosure, the processor is further configured to perform:
receiving multi-path link configuration information which is sent by the network side based on the SL-EMR measurement result, and performing the link recovery based on the multi-path link configuration information.

In some embodiment of the present disclosure, the processor is further configured to perform:
receiving SL-EMR measurement configuration information sent by the network side, before entering into the non-connected state;
the obtaining the SL-EMR measurement result in the non-connected state includes:
obtaining the SL-EMR measurement result based on the SL-EMR measurement configuration information in the non-connected state.

In some embodiment of the present disclosure, the SL-EMR measurement configuration information includes one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

In some embodiment of the present disclosure, the SL-EMR measurement object information includes identification information of at least one preset relay UE, and the preset relay UE indicated by the identification information of the preset relay UE is measured preferentially.

In some embodiment of the present disclosure, the obtaining the SL-EMR measurement result based on the SL-EMR measurement configuration information in the non-connected state includes:
obtaining the SL-EMR measurement result based on the SL-EMR measurement configuration information before the SL-EMR measurement time timer expires, if the SL-EMR measurement configuration information includes the SL-EMR measurement time timer length information;
obtaining the SL-EMR measurement result based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not include the SL-EMR measurement time timer length information.

In some embodiment of the present disclosure, the processor is further configured to perform:
receiving a relay discovery instruction sent by the network side, before entering into the non-connected state;
the obtaining the SL-EMR measurement result in the non-connected state includes:
executing the relay discovery instruction and measuring the discovered relay UE, and taking a measurement result as the SL-EMR measurement result in the non-connected state.

In some embodiment of the present disclosure, the sending the SL-EMR measurement result to the corresponding network side in the connected state includes:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

In some embodiment of the present disclosure, the processor is further configured to perform:
resending, when accessing a new cell, the SL-EMR measurement result to the corresponding network side in the new cell, if a handover or re-establishment occurs during a process of sending the SL-EMR measurement result to the corresponding network side.

In some embodiment of the present disclosure, the performing the link recovery based on the multi-path link configuration information comprises:
establishing a PC5 interface connection with the relay UE indicated by the multi-path link configuration information.

In some embodiment of the present disclosure, the processor is further configured to perform:
sending SL-EMR measurement support indication information to the network side, before entering into the non-connected state.

In a fourth aspect, a base station is in an embodiment of the present disclosure, including a memory, a transceiver and a processor, where
the memory is configured to store a computer program; a transceiver is configured to send and receive data under a control of the processor; and a processor is configured to read the computer program in the memory to perform:
receiving a sidelink early measurement report (SL-EMR) measurement result sent by the UE, when a UE enters into a connected state;
determining, if it is determined based on the SL-EMR measurement result that a multi-path link is to be configured, corresponding multi-path link configuration information based on the SL-EMR measurement result, and sending the multi-path link configuration information to the UE, to enable the UE to perform a link recovery based on the multi-path link configuration information.

In some embodiment of the present disclosure, the processor is further configured to perform:
sending SL-EMR measurement configuration information to the UE, before entering into the non-connected state, to enable the UE to obtain the SL-EMR measurement result based on the SL-EMR measurement configuration information when the UE is in a non-connected state.

In some embodiment of the present disclosure, the sending SL-EMR measurement configuration information to the UE includes:
carrying the SL-EMR measurement configuration information in a dedicated signaling to send the SL-EMR measurement configuration information to the UE; and/or,
carrying the SL-EMR measurement configuration information in system information to send the SL-EMR measurement configuration information to the UE.

In some embodiment of the present disclosure, the dedicated signaling includes a radio resource control (RRC) connection release message or an RRC reconfiguration message.

In some embodiment of the present disclosure, the system information includes a system information block (SIB) message shared with a Uu-link early measurement report (Uu-EMR) measurement or a separate SIB message.

In some embodiment of the present disclosure, the SL-EMR measurement configuration information is obtained by:
obtaining a relay-related measurement configuration;
obtaining the SL-EMR measurement configuration information based on the relay-related measurement configuration and a network-related measurement configuration.

In some embodiment of the present disclosure, the obtaining the relay-related measurement configuration includes one of the following methods:
sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

In some embodiment of the present disclosure, when the SL-EMR measurement configuration information is carried in an RRC connection release message and sent to the UE, the obtaining the SL-EMR measurement configuration information based on the relay-related measurement configuration and the network-related measurement configuration includes:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

In some embodiment of the present disclosure, the processor is further configured to perform:
sending a relay discovery instruction to the UE, before entering into the non-connected state, to enable the UE to execute the relay discovery instruction and measure a discovered relay node when the UE is in the non-connected state, and taking a measurement result as the SL-EMR measurement result.

In an optical embodiment of the present disclosure, the sending the SL-EMR measurement configuration information to the UE, includes:
sending the relay discovery instruction to the UE via a dedicated signaling carrying the relay discovery instruction; and/or sending the relay discovery instruction to the UE via system information carrying the relay discovery instruction.

In an optical embodiment of this disclosure, the dedicated signaling is a Radio Resource Control (RRC) connection release message or RRC reconfiguration message.

In an optical embodiment of this disclosure, the system information is a system information block (SIB) message shared with a Uu-link early measurement report (Uu-EMR) measurement or a separate SIB message.

In a fifth aspect, a link recovery device is in an embodiment of the present disclosure, including:
a measurement result obtaining module, configured to, obtain a sidelink early measurement report (SL-EMR) measurement result in a non-connected state;
a measurement result sending module, configured to, send the SL-EMR measurement result to a corresponding network side to perform a link recovery in a connected state.

In a sixth aspect, a link recovery device is in an embodiment of the present disclosure, including:
a measurement result receiving module, configured to receive a sidelink early measurement report (SL-EMR) measurement result sent by the UE, when a UE enters into a connected state;
a multi-path link configuration information determining module, configured to, determine, if it is determined based on the SL-EMR measurement result that a multi-path link is to be configured, corresponding multi-path link configuration information based on the SL-EMR measurement result, and send the multi-path link configuration information to the UE, to enable the UE to perform a link recovery based on the multi-path link configuration information.

In a seventh aspect, a processor-readable storage medium is in an embodiment of the present disclosure, storing a computer program, where the computer program is configured to enable the processor to execute the method according to the first or the second aspect.

### BRIEF DESCRIPTION OF THE DRAWINGS

In order to more clearly illustrate the technical solutions in the embodiments of the present disclosure, the drawings required for describing the embodiments of the present disclosure are briefly introduced below.
FIG.1 is a schematic diagram of an EMR process for a Uu port in an embodiment of the present disclosure;
FIG.2 is a flow chart of a link recovery method applied to a UE side in an embodiment of the present disclosure;
FIG.3 is a flow chart of a link recovery method applied to a network side in an embodiment of the present disclosure;
FIG.4 is a schematic diagram of a process of generating and sending SL-EMR measurement configuration information by a network side in an embodiment of the present disclosure;
FIG.5 is a flow chart of a link recovery method in a multi-path/multi-connection scenario in an example of an embodiment of the present disclosure;
FIG.6 is a schematic diagram of the structure of a user equipment (UE) in an embodiment of the present disclosure;
FIG.7 is a schematic diagram of the structure of a base station in an embodiment of the present disclosure;
FIG.8 is a structural block diagram of a link recovery device in an embodiment of the present disclosure; and
FIG.9 is a structural block diagram of another link recovery device in an embodiment of the present disclosure.

### DETAILED DESCRIPTION

Embodiments of the present disclosure are described in detail below, examples of which are shown in the accompanying drawings, where the same or similar reference numerals throughout represent the same or similar elements or elements having the same or similar functions. The embodiments described below with reference to the accompanying drawings are exemplary and are only used to explain the present disclosure, and cannot be interpreted as limiting the present disclosure.

It will be understood by those skilled in the art that, unless expressly stated, the singular forms "one", "said", and "the" used herein may also include plural forms. It should be further understood that the term "including" used in the specification of the present disclosure refers to the presence of the features, integers, steps, operations, elements, and/or components, but does not exclude the presence or addition of one or more other features, integers, steps, operations, elements, components, and/or groups thereof. It should be understood that when we refer to an element as being "connected" or "coupled" to another element, it may be directly connected or coupled to the other element, or there may be intermediate elements. In addition, the "connection" or "coupling" used herein may include wireless connection or wireless coupling. The term "and/or" used herein includes all or any unit and all combinations of one or more associated listed items.

In order to make the objectives, technical solutions and advantages of the present disclosure more clear, the embodiments of the present disclosure will be further described in detail below with reference to the accompanying drawings.

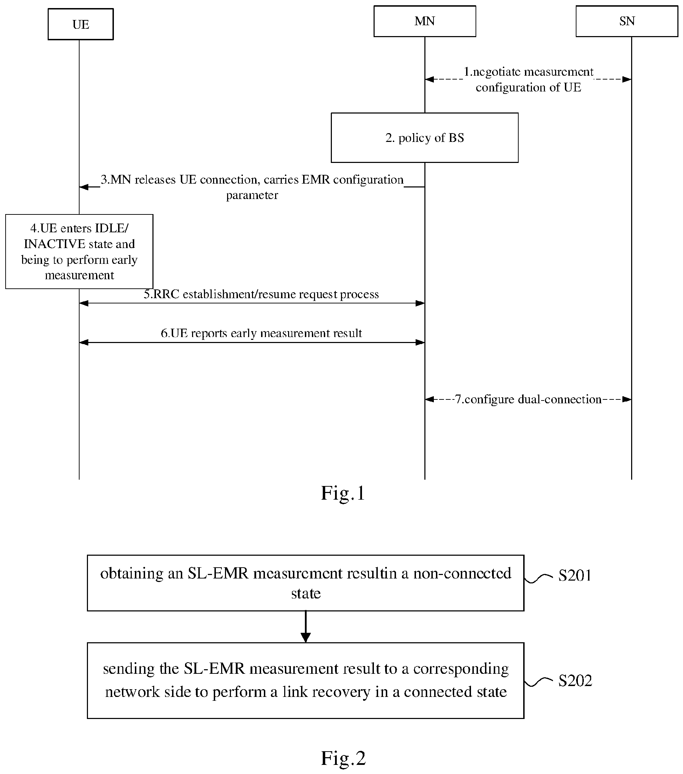

For links involving only the Uu port, fast link recovery can be achieved based on early measurement report (EMR). In an example of an LTE/NR dual-connection architecture, there may be a MN (Master Node) and one or more SNs (Secondary Nodes). Both the MN and SN nodes are base station nodes, and can use technologies such as LTE/e-LTE/NR. In the current EMR process for the Uu port, when the MN releases the UE connection, the RRC release message carries EMR-related configuration information, including: carrier information, area range, and timer. Of course, EMR-related configuration information can also be carried in the system information. As shown in Figure 1, the EMR process for the Uu port can include the following steps:
1. The MN negotiates the measurement configuration process of the UE with the SN. This step is optional. The MN can directly decide which early measurement configuration information to send to the UE.
2. The MN determines whether to send early measurement configuration to the UE;
3. When the network sends a connection release message to the UE, it can carry the EMR configuration information;
4. After receiving the message, the UE enters the IDLE (idle mode)/INACTIVE (deactivated mode) state and collects relevant measurement result;
5. When the UE establishes/recovers a connection, the EMR available indication information is carried in the RRC establishment/resume complete message;
6. If the network wants to obtain the EMR measurement result, it requests the UE to report. The UE reports the previously collected IDLE/INACTIVE state EMR measurement result to the network side;
7. The network side can configure dual connectivity for the UE based on the collected measurement result. Based on the EMR measurement result reported by the UE, the newly configured SN can be the same as or different from the SN before the UE connection is released.

If there is no EMR early measurement and reporting mechanism for the Uu port, when the UE establishes/resumes the RRC connection, the network side needs to reconfigure the measurement for the UE, and then the UE reports to the network side after measurement and evaluation, so that the network can configure the appropriate dual connection for the UE. After using the EMR method for the Uu port, the time for the UE to re-receive measurement configuration and perform measurement and evaluation after entering the connected state is saved, so that the network can perform dual connection configuration for the UE as soon as possible, recover/establish dual connection, and quickly improve the peak rate.

However, currently there are only EMR methods and configuration parameters for the Uu port, but there are no relevant EMR methods and configuration parameters for the PC5 interface of the sidelink. Therefore, since the multi-path/multi-connection scenario involves the sidelink direct communication interface and the Uu port, the current link recovery solution cannot achieve rapid link recovery in this scenario.

The link recovery method, device, equipment and storage medium provided by the present disclosure are intended to solve the above technical problems in the prior art.

The technical solution of the present disclosure and how the technical solution of the present disclosure solves the above-mentioned technical problems are described in detail below with specific embodiments. The following specific embodiments can be combined with each other, and the same or similar concepts or processes may not be repeated in some embodiments. The embodiments of the present disclosure will be described below in conjunction with the accompanying drawings.

FIG. 2 is a flow chart of a link recovery method in an embodiment of the present disclosure. The solution is applied to a user equipment (UE) side. As shown in FIG. 2, the method may include:

Step S201, obtaining a sidelink early measurement report (SL-EMR) measurement result in a non-connected state; Step S202, sending the SL-EMR measurement result to a corresponding network side to perform a link recovery in a connected state.

Specifically, when the UE is in a non-connected state, the UE performs EMR measurement on the SL (sideline) related nodes based on the received SL-EMR measurement indication to obtain the corresponding SL-EMR measurement result. When the UE enters a connected state, the SL-EMR measurement result is sent to the corresponding network side. The network side analyzes and judges based on the received SL-EMR measurement result to achieve connection recovery between the UE and the corresponding network side.

According to the solution provided by the embodiment of the present disclosure, the UE obtains the SL-EMR measurement result when it is in a non-connected state, and reports the SL-EMR measurement result to the corresponding network side when it enters into a connected state, so that the UE does not need to perform EMR measurements of SL-related nodes before the link recovery with the corresponding network side is needed, thereby saving the time of the UE to re-obtain the SL-EMR measurement result after entering the connected state, thereby enabling rapid link recovery in multi-path/multi-connection scenarios.

In an optional embodiment of the present disclosure, the method may further include:
receiving multi-path link configuration information which is sent by the network side based on the SL-EMR measurement result, and performing the link recovery based on the multi-path link configuration information.

Specifically, after the UE sends the obtained SL-EMR measurement result to the corresponding network side, the network side determines whether to configure multi-path/multi-connection for the UE based on the content of the SL-EMR measurement result. If it is determined that multi-path/multi-connection needs to be configured, the network side will generate corresponding multi-path link configuration information based on the received SL-EMR measurement result, and feed back the multi-path link configuration information to the UE. After receiving the multi-path link configuration information, the UE will perform a link recovery based on the multi-path link configuration information.

In the disclosed solution, the UE can obtain the SL-EMR measurement result based on two methods, one is to obtain the SL-EMR measurement result based on the SL-EMR measurement configuration information sent by the network side, and the other is to obtain the SL-EMR measurement result based on the relay discovery indication sent by the network side. The following will describe these two methods in detail.

In an optional embodiment of the present disclosure, the method may further include:
receiving SL-EMR measurement configuration information sent by the network side, before entering into the non-connected state;
the obtaining the SL-EMR measurement result in the non-connected state includes:
obtaining the SL-EMR measurement result based on the SL-EMR measurement configuration information in the non-connected state.

Specifically, before the UE is in a non-connected state, it receives the SL-EMR measurement configuration information sent by the network side, and when it is in a connected state, it performs EMR measurement of SL-related nodes based on the received SL-EMR measurement configuration information to obtain the SL-EMR measurement result.

In an optional embodiment of the present disclosure, the SL-EMR measurement configuration information may include one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

Specifically, the SL-EMR measurement object information may further include: transmission resource pool related information, frequency information, reference symbol information, channel configuration information, measurement bandwidth information, etc.

The SL-EMR report configuration information may further include: measurement trigger event configuration, related threshold information (such as measurement evaluation threshold value, which can be the threshold value of any one of SL-RSRP, SD-RSRP and SL-U measurement quantities), measurement recording period, number of records, etc.

The SL-EMR measurement area range information may further include: cell-level area information, TA-level area information, frequency-level area information or a PLMN list.

In an optional embodiment of the present disclosure, the SL-EMR measurement object information includes identification information of at least one preset relay UE, and the preset relay UE indicated by the identification information of the preset relay UE is measured preferentially.

Specifically, the preset relay UE may be one or more relay UEs connected to the UE before the UE is in the non-connected state. When the UE performs EMR measurement, the UE will preferentially measure these preset relay UEs.

It should be noted that the link recovery mentioned in the embodiments of the present disclosure can be based on the SL-EMR measurement result to restore the link between the UE and the previously connected relay UE, or based on the SL-EMR measurement result to restore the link between the UE and a new relay UE. In other words, the relay nodes corresponding to the restored link and the previous link may be the same or different.

In an optional embodiment of the present disclosure, when in a non-connected state, obtaining a SL-EMR measurement result based on the SL-EMR measurement configuration information includes:
obtaining the SL-EMR measurement result based on the SL-EMR measurement configuration information before the SL-EMR measurement time timer expires, if the SL-EMR measurement configuration information includes the SL-EMR measurement time timer length information;
obtaining the SL-EMR measurement result always based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not include the SL-EMR measurement time timer length information.

Specifically, if the SL-EMR measurement configuration information includes the SL-EMR measurement time timer length information, it means that the network side has separately configured the SL-EMR measurement time timer for the UE, then the UE's EMR measurement for the relay is performed before the timer expires, that is, the SL-EMR measurement result is obtained based on the SL-EMR measurement configuration information, and whether to continue to execute after the timer expires depends on the UE implementation. If the SL-EMR measurement configuration information does not include the SL-EMR measurement time timer length information, it means that the network side has not separately configured the SL-EMR measurement time timer for the UE. Then, the UE's EMR measurement for the relay is performed before the EMR timer originally configured for the Uu port (that is, the Uu-EMR measurement time timer) expires, and the SL-EMR measurement result is obtained based on the SL-EMR measurement configuration information, and whether to continue to execute after the timer expires depends on the UE implementation; or, the UE obtains the SL-EMR measurement result always based on the SL-EMR measurement configuration information.

It should be noted that, in addition to the SL-EMR configuration parameters, the SL-EMR configuration information may also include Uu-EMR configuration parameters, and the process of performing EMR measurement on the Uu port based on the Uu-EMR configuration parameters will not be described in detail here.

It is understandable that if the UE receives EMR configuration for the relay, EMR measurement and recording is performed only for the relay. If the UE receives EMR configuration for both the cell/base station and the relay, EMR measurement and recording is performed for both the cell/base station and the relay.

In an optional embodiment of the present disclosure, the method may further include:
receiving a relay discovery instruction sent by the network side, before entering into the non-connected state;
the obtaining the SL-EMR measurement result in the non-connected state includes:
executing the relay discovery instruction and measuring the discovered relay UE, and taking a measurement result as the SL-EMR measurement result in the non-connected state.

Specifically, before the UE is in a non-connected state, it receives a relay discovery instruction sent by the network side, and when it is in a connected state, it executes the relay discovery instruction and measures the discovered relay UE, and uses the measurement result as the SL-EMR measurement result. This method saves the workload of the network side to configure the SL-EMR measurement configuration information, and simplifies the work of the network side during the link recovery process.

In an optional embodiment of the present disclosure, when entering the connected state, sending the SL-EMR measurement result to the corresponding network side includes:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

Specifically, after the UE obtains the SL-EMR measurement result, there are two ways to report the SL-EMR measurement result to the network side when entering the connected state. One is to directly carry the SL-EMR measurement result in the wireless resource control RRC establishment/resume complete message and send it to the corresponding network side. The second is to send the RRC establishment/resume complete message carrying the SL-EMR measurement result indication information to the corresponding network side, that is, to send the SL-EMR measurement result available indication (available indicator) to the network side, and the available indication can reuse the existing EMR measurement result available indication for the Uu port. Then the network side requests the corresponding SL-EMR measurement result from the UE based on the available indication.

Specifically, the UE indicates to the network side that the UE has saved the SL-EMR measurement result, or the UE reuses the existing available indication of the EMR measurement result for the Uu port; the network side requests the UE for the SL's separate EMR measurement result, or all EMR measurement result, based on the available indication; accordingly, the UE reports the SL's separate EMR measurement result, or all EMR measurement result, to the network side.

In an optional embodiment of the present disclosure, the method may further include:
resending, when accessing a new cell, the SL-EMR measurement result to the corresponding network side in the new cell, if a handover or re-establishment occurs during a process of sending the SL-EMR measurement result to the corresponding network side.

Specifically, if the UE has saved the SL-EMR measurement configuration information, but a handover or re-establishment occurs before the reporting is completed after accessing the connected state, when the UE accesses a new cell, it can be re-reported in the new cell. The reporting method can be:
the measurement result is directly carried in the RRC reconfiguration/reestablishment complete message; or,
only the available indicator of the relevant results is carried in the RRC reconfiguration/reestablishment complete message, and then the measurement result are reported separately in subsequent steps (for example, the network side requests the UE to report the measurement result after receiving the available indication).

If the method of sending an available indication and then waiting for the network to request a measurement result is used, the relevant method or combination of methods is the same as that in the above embodiment.

In an optional embodiment of the present disclosure, link recovery is performed based on multi-path link configuration information, including:
establishing a PC5 port connection with the relay UE indicated by the multi-path link configuration information.

Specifically, after receiving the multi-path link configuration information from the network side, the UE initiates a PC5 port connection with the relay UE indicated in the multi-path link configuration information. The connection may be triggered by the UE or by the relay UE.

In an optional embodiment of the present disclosure, the method may further include:
sending an indication message of supporting SL-EMR measurement to the network side, before entering into the non-connected state.

Specifically, in order to enable the network side to know whether the UE supports SL-related early measurement and recording/reporting, or to distinguish it from the currently existing Uu-EMR, the UE can report whether it supports SL-EMR in the AS capability report. Specifically, if the UE supports SL-EMR, it sends SL-EMR measurement indication information to the network side before being in a non-connected state.

After receiving the UE capability indication, the network can determine whether the UE supports SL EMR, and thus determine whether to send SL-related EMR configuration information to the UE. If the UE's Uu-related EMR and SL-related EMR use a common available indicator, this capability enables the network to determine whether the EMR measurement result obtained from the UE include SL-EMR measurement result, thereby evaluating the size of the UE's reported information before requesting an indication from the UE and determining the appropriate time to obtain the EMR measurement result.

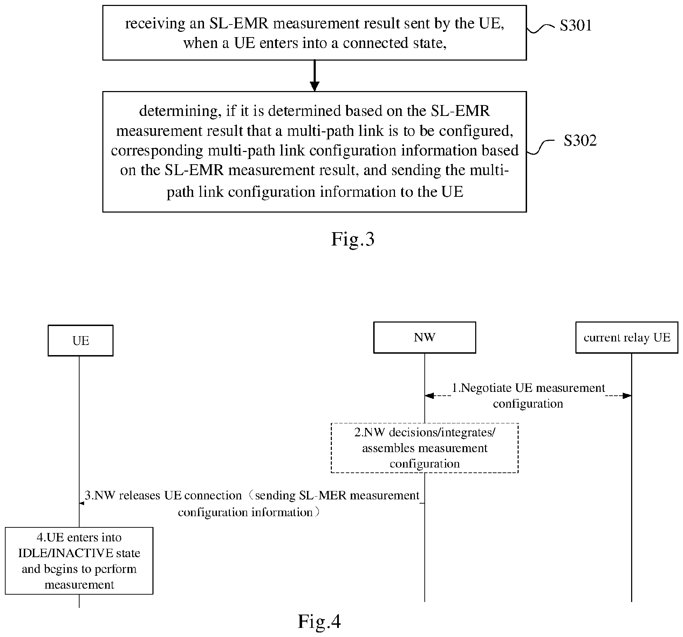

FIG.3 is a flow chart of a link recovery method in an embodiment of the present disclosure, which is applied to a network side. As shown in FIG3, the method may include:

Step S301, receiving a sidelink early measurement report (SL-EMR) measurement result sent by the UE, when a UE enters into a connected state; Step S302, determining, if it is determined based on the SL-EMR measurement result that a multi-path link is to be configured, corresponding multi-path link configuration information based on the SL-EMR measurement result, and send the multi-path link configuration information to the UE, to enable the UE to perform a link recovery based on the multi-path link configuration information.

The SL-EMR measurement result sent by the UE is measured and obtained based on the received SL-EMR measurement indication when the UE is in a non-connected state.

According to the solution provided by the embodiment of the present disclosure, the UE obtains the SL-EMR measurement result when it is in a non-connected state, and reports the SL-EMR measurement result to the corresponding network side when it enters a connected state, so that the UE does not need to perform EMR measurements of SL-related nodes before the link recovery with the corresponding network side is needed, thereby saving the time of the UE to re-obtain the SL-EMR measurement result after entering the connected state, thereby enabling rapid link recovery in multi-path/multi-connection scenarios.

As described above, in the disclosed solution, the UE can obtain the SL-EMR measurement result based on two methods, one of which is to obtain the SL-EMR measurement result based on the SL-EMR measurement configuration information sent by the network side, and the other is based on the relay discovery indication sent by the network side. Therefore, in the first method, the network side needs to send the SL-EMR measurement configuration information, and in the second method, the network side needs to send the relay discovery indication. The network side's sending process in the two methods will be described in detail below.

In an optional embodiment of the present disclosure, the method may further include:
sending SL-EMR measurement configuration information to the UE, before entering into the non-connected state, to enable the UE to obtain the SL-EMR measurement result based on the SL-EMR measurement configuration information when the UE is in a non-connected state.

Specifically, the sending SL-EMR measurement configuration information to the UE includes: carrying the SL-EMR measurement configuration information in a dedicated signaling to send the SL-EMR measurement configuration information to the UE; and/or, carrying the SL-EMR measurement configuration information in system information to send the SL-EMR measurement configuration information to the UE.

The dedicated signaling is a radio resource control (RRC) connection release message or an RRC reconfiguration message. The system information is a system information block (SIB) message shared with the air interface link early measurement report Uu-EMR measurement or a separate SIB message.

In an optional embodiment of the present disclosure, the SL-EMR measurement configuration information is obtained in the following manner: obtaining relay-related measurement configuration; and obtaining SL-EMR measurement configuration information based on the relay-related measurement configuration and the network-related measurement configuration.

Specifically, the measurement configuration information for quickly establishing/restoring multi-path/multi-connection may allow the NW node to negotiate with the existing relay UE of the remote UE (i.e., the current relay UE connected to the UE), and finally the NW decides the measurement configuration information to be sent to the UE and sends it to the UE; or the NW may decide on its own to send the measurement configuration information to the UE and send it directly to the UE. The measurement configuration information finally sent can be obtained by integrating the relay-related measurement configuration and the network-related measurement configuration.

In an optional embodiment of the present disclosure, obtaining the relay-related measurement configuration includes any one of the following methods: sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

Specifically, when the NW decides to release the RRC connection with the UE to IDLE or INACTIVE, and wants to configure the UE for SL-EMR multi-path/multi-connection measurement, it can negotiate the SL-EMR measurement configuration information with the current relay UE of the UE. The negotiation process may include the following three schemes:
Solution 1: The NW node may send a measurement configuration request (i.e., a first measurement configuration request) to the current relay UE, and the current relay UE feeds back the content that needs to be measured by the UE to the NW node;
Solution 2: The NW may send a request carrying a recommended configuration (ie, a second measurement configuration request) to the current relay UE, and the current relay UE sends relay-related supplementary/corrected measurement configuration parameters to the NW based on the existing measurement configuration of the NW.
Solution 3: The current relay UE directly sends relay-related measurement configuration to the NW node.

In an optional embodiment of the present disclosure, if the SL-EMR measurement configuration information is carried in an RRC connection release message and sent to the UE, the SL-EMR measurement configuration information is obtained based on the relay-related measurement configuration and the network-related measurement configuration, including:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

Specifically, when assembling the SL-EMR measurement configuration information finally sent to the UE, the NW can configure the relay-related measurement configuration and the NW-related measurement configuration together in an RRC connection release message, and set a separate field to carry it independently (for example, the NW node and the relay node are inter-RAT), or the NW node makes the decision/integration and only sets a set of final parameters to be sent to the UE.

It can be understood that the process of the network side generating SL-EMR measurement configuration information and sending it to the UE for corresponding SL-EMR measurement is shown in FIG.4 and may include the following steps:
1. NW negotiates with the current relay UE to send the measurement configuration to the UE (including network-related measurement configuration and relay-related measurement configuration);
2. NW makes decisions/integrates/assembles network-related measurement configurations and relay-related measurement configurations to obtain SL-EMR measurement configuration information sent to UE;
3. NW sends the obtained SL-EMR measurement configuration information to UE;
4. When the UE is in a non-connected state, it performs measurements based on the received SL-EMR measurement configuration information.

In an optional embodiment of the present disclosure, the method may further include:
sending a relay discovery instruction to the UE, before entering into the non-connected state, to enable the UE to execute the relay discovery instruction and measure a discovered relay node when the UE is in the non-connected state, and taking a measurement result as the SL-EMR measurement result.

Specifically, sending SL-EMR measurement configuration information to the UE includes: carrying the relay discovery instruction in dedicated signaling and sending it to the UE; and/or carrying the relay discovery instruction in system information and sending it to the UE.

The dedicated signaling is a radio resource control (RRC) connection release message or an RRC reconfiguration message. The system information is a system information block (SIB) message shared with the air interface link early measurement report Uu-EMR measurement or a separate SIB message.

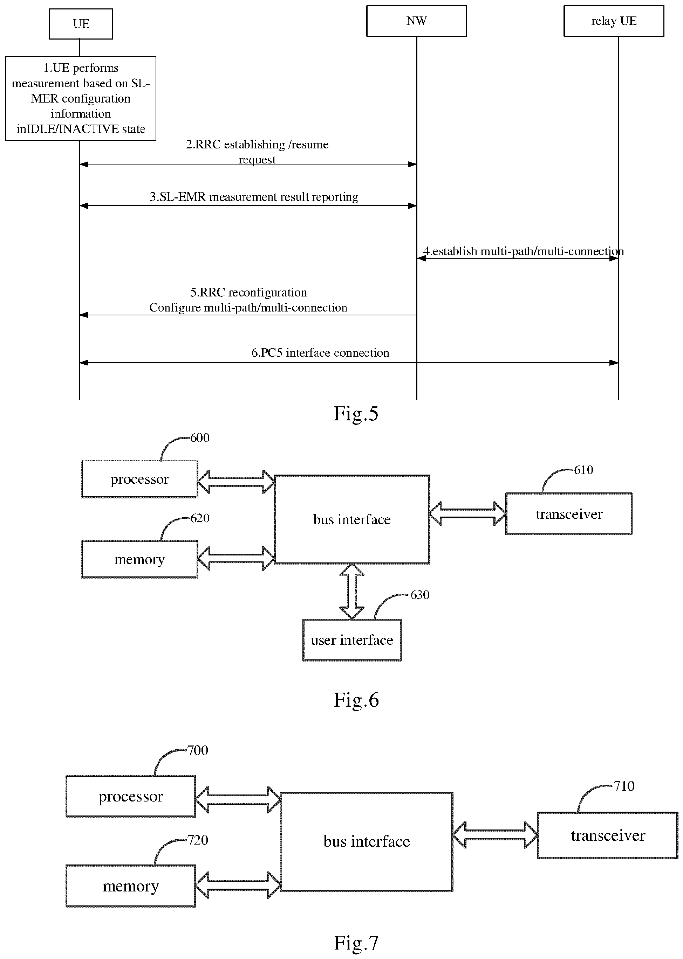

The link recovery method in a multi-path/multi-connection scenario in an embodiment of the present disclosure is further described below by taking an example. As shown in FIG5, the method may include the following steps:
1. The UE performs measurement based on the SL-EMR measurement configuration information configured by the network in the IDLE/INACTIVE state and obtains the corresponding SL-EMR measurement result;
2. The UE establishes/resumes an RRC connection with the network side. This step may be initiated by the network side paging the UE, or the UE may initiate the connection establishment/resume by itself. In this step, the UE may establish a direct connection with the NW, or establish an indirect connection through one or more relay UEs. In this case, the NW and the connected relay UE are connected via the Uu port, and the UE and the relay UE, as well as the relay UE and the relay UE, are connected via the PC5 port.
3. The UE reports the SL-EMR measurement result to the network side;
4. After receiving the SL-EMR measurement result, the network-side node that establishes/resumes the connection with the UE decides whether to configure multi-path/multi-connection for the UE based on the measurement result. If it is determined that configuration is required, the multi-path link configuration information is sent to the corresponding relay UE, which may include the UE's measurement result for the relay;
5. At the same time, the NW sends the multi-path link configuration information to the UE in the RRC reconfiguration message to complete the configuration for the UE; the order of step 5 and step 4 can be changed;
6. After receiving the network side configuration, the UE initiates a PC5 port connection with the relay UE indicated in the configuration. The connection may be triggered by the UE or by the relay UE.

FIG.6 is a schematic diagram of the structure of a user equipment (UE) in an embodiment of the present disclosure. As shown in FIG. 6, the UE includes a memory 620, a transceiver 610, a processor 600, and a user interface 630 :

The memory 620 is used to store computer programs; the transceiver 610 is used to send and receive data under the control of the processor; the processor 600 is used to read the computer program in the memory 620 and perform the following operations:
obtaining a sidelink early measurement report (SL-EMR) measurement result in a non-connected state;
sending the SL-EMR measurement result to a corresponding network side to perform a link recovery in a connected state.

In some embodiment of the present disclosure, the processor is further configured to perform:
receiving multi-path link configuration information which is sent by the network side based on the SL-EMR measurement result, and performing the link recovery based on the multi-path link configuration information.

In some embodiment of the present disclosure, the processor is further configured to perform:
receiving SL-EMR measurement configuration information sent by the network side, before entering into the non-connected state;
the obtaining the SL-EMR measurement result in the non-connected state includes:
obtaining the SL-EMR measurement result based on the SL-EMR measurement configuration information in the non-connected state.

In some embodiment of the present disclosure, the SL-EMR measurement configuration information includes one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

In some embodiment of the present disclosure, the SL-EMR measurement object information includes identification information of at least one preset relay UE, and the preset relay UE indicated by the identification information of the preset relay UE is measured preferentially.

In some embodiment of the present disclosure, in the non-connected state, the obtaining the SL-EMR measurement result based on the SL-EMR measurement configuration information includes:
obtaining the SL-EMR measurement result based on the SL-EMR measurement configuration information before the SL-EMR measurement time timer expires, if the SL-EMR measurement configuration information includes the SL-EMR measurement time timer length information;
obtaining the SL-EMR measurement result based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not include the SL-EMR measurement time timer length information.

In some embodiment of the present disclosure, the processor is further configured to perform:
receiving a relay discovery instruction sent by the network side, before entering into the non-connected state;
the obtaining the SL-EMR measurement result in the non-connected state includes:
executing the relay discovery instruction and measuring the discovered relay UE, and taking a measurement result as the SL-EMR measurement result in the non-connected state.

In some embodiment of the present disclosure, the sending the SL-EMR measurement result to the corresponding network side in the connected state includes:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

In some embodiment of the present disclosure, the processor is further configured to perform:
resending, when accessing a new cell, the SL-EMR measurement result to the corresponding network side in the new cell, if a handover or re-establishment occurs during a process of sending the SL-EMR measurement result to the corresponding network side.

In some embodiment of the present disclosure, the performing the link recovery based on the multi-path link configuration information comprises:
establishing a PC5 interface connection with the relay UE indicated by the multi-path link configuration information.

In some embodiment of the present disclosure, the method further includes:
sending SL-EMR measurement support indication information to the network side, before entering into the non-connected state.

Furthermore, the transceiver 610 is used to receive and send data under the control of the processor 600.

In Figure 6, the bus architecture may include any number of interconnected buses and bridges, specifically one or more processors 600 represented by processor 600 and various circuits of memory 620 represented by memory 620 are linked together. The bus architecture can also link various other circuits such as peripherals, regulators, and power management circuits together, which are all well known in the art, so they are not further described herein. The bus interface provides an interface. The transceiver 610 can be a plurality of components, namely, a transmitter and a receiver, providing a unit for communicating with various other devices on a transmission medium, and these transmission media include transmission media such as wireless channels, wired channels, and optical cables. For different user devices, the user interface 630 can also be an interface that can be connected to external and internal devices, and the connected devices include but are not limited to keypads, displays, speakers, microphones, joysticks, etc.

The processor 600 is responsible for managing the bus architecture and general processing, and the memory 620 can store data used by the processor 600 when performing operations.

Optionally, the processor 600 may be a CPU (central processing unit), an ASIC (Application Specific Integrated Circuit), an FPGA (Field-Programmable Gate Array) or a CPLD (Complex Programmable Logic Device), and the processor 600 may also adopt a multi-core architecture.

The processor 600 is used to execute any method provided by the embodiment of the present disclosure according to the obtained executable instructions by calling the computer program stored in the memory 620. The processor 600 and the memory 620 can also be arranged physically separately.

FIG.7 is a schematic diagram of the structure of a base station in an embodiment of the present disclosure. As shown in FIG7, the base station includes a memory 720, a transceiver 710, and a processor 700:

The memory 720 is used to store computer programs; the transceiver 710 is used to send and receive data under the control of the processor; the processor 700 is used to read the computer program in the memory 720 and perform the following operations:
receiving a sidelink early measurement report (SL-EMR) measurement result sent by the UE, when a UE enters into a connected state;
determining, if it is determined based on the SL-EMR measurement result that a multi-path link is to be configured, corresponding multi-path link configuration information based on the SL-EMR measurement result, and sending the multi-path link configuration information to the UE, to enable the UE to perform a link recovery based on the multi-path link configuration information.

In some embodiment of the present disclosure, the processor is further configured to perform:
sending SL-EMR measurement configuration information to the UE, before entering into the non-connected state, to enable the UE to obtain the SL-EMR measurement result based on the SL-EMR measurement configuration information when the UE is in a non-connected state.

In some embodiment of the present disclosure, the sending SL-EMR measurement configuration information to the UE includes:
carrying the SL-EMR measurement configuration information in a dedicated signaling to send the SL-EMR measurement configuration information to the UE; and/or,
carrying the SL-EMR measurement configuration information in system information to send the SL-EMR measurement configuration information to the UE.

In some embodiment of the present disclosure, the dedicated signaling is a radio resource control (RRC) connection release message or an RRC reconfiguration message.

In some embodiment of the present disclosure, the system information is a system information block (SIB) message shared with a Uu-link early measurement report (Uu-EMR) measurement or a separate SIB message.

In some embodiment of the present disclosure, the SL-EMR measurement configuration information is obtained by:
obtaining a relay-related measurement configuration;
obtaining the SL-EMR measurement configuration information based on the relay-related measurement configuration and a network-related measurement configuration.

In some embodiment of the present disclosure, the obtaining the relay-related measurement configuration includes one of the following methods:
sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

In some embodiment of the present disclosure, when the SL-EMR measurement configuration information is carried in an RRC connection release message and sent to the UE, the obtaining the SL-EMR measurement configuration information based on the relay-related measurement configuration and the network-related measurement configuration includes:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

In some embodiment of the present disclosure, the processor is further configured to perform:
sending a relay discovery instruction to the UE, before entering into the non-connected state, to enable the UE to execute the relay discovery instruction and measure a discovered relay node when the UE is in the non-connected state, and taking a measurement result as the SL-EMR measurement result.

In an optical embodiment of the present disclosure, the sending the SL-EMR measurement configuration information to the UE, includes:
sending the relay discovery instruction to the UE via a dedicated signaling carrying the relay discovery instruction; and/or sending the relay discovery instruction to the UE via system information carrying the relay discovery instruction.

In an optical embodiment of this disclosure, the dedicated signaling is a Radio Resource Control (RRC) connection release message or RRC reconfiguration message.

In an optical embodiment of this disclosure, the system information is a system information block (SIB) message shared with a Uu-link early measurement report (Uu-EMR) measurement or a separate SIB message.

Furthermore, the transceiver 710 is used to receive and send data under the control of the processor 700.

In Figure 7, the bus architecture can include any number of interconnected buses and bridges, specifically one or more processors 700 represented by processor 700 and various circuits of memory 720 represented by memory 720 are linked together. The bus architecture can also link various other circuits such as peripherals, regulators, and power management circuits together, which are all well known in the art, so they are not further described herein. The bus interface provides an interface. The transceiver 710 can be a plurality of components, that is, including a transmitter and a receiver, providing a unit for communicating with various other devices on a transmission medium, and these transmission media include transmission media such as wireless channels, wired channels, and optical cables. The processor 700 is responsible for managing the bus architecture and general processing, and the memory 720 can store data used by the processor 700 when performing operations.

The processor 700 may be a central processing unit (CPU), an application specific integrated circuit (ASIC), a field programmable gate array (FPGA) or a complex programmable logic device (CPLD). The processor 700 may also adopt a multi-core architecture.

It should be noted here that the above-mentioned device provided in the embodiment of the present disclosure can implement all the method steps implemented in the above-mentioned method embodiment, and can achieve the same technical effect. The parts and beneficial effects that are the same as the method embodiment in this embodiment will not be described in detail here.

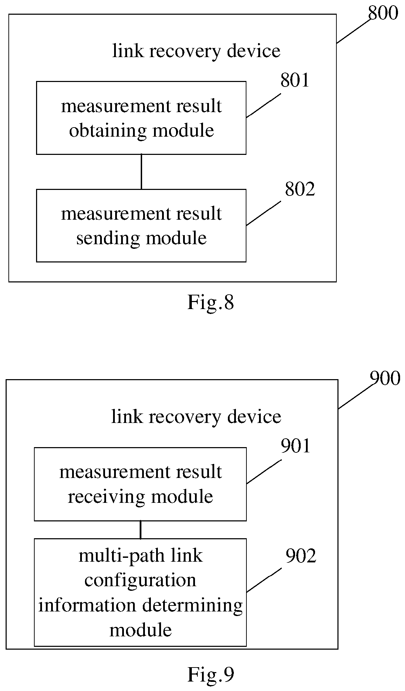

FIG.8 is a structural block diagram of a link recovery device in an embodiment of the present disclosure. As shown in FIG8, the device 800 may include: a measurement result obtaining module 801 and a measurement result sending module 802, where:
a measurement result obtaining module 801, configured to, obtain a sidelink early measurement report (SL-EMR) measurement result in a non-connected state;
a measurement result sending module 802, configured to, send the SL-EMR measurement result to a corresponding network side to perform a link recovery in a connected state.

In some embodiment of the present disclosure, the measurement result sending module is further configured to:
receive multi-path link configuration information which is sent by the network side based on the SL-EMR measurement result, and perform the link recovery based on the multi-path link configuration information.

In some embodiment of the present disclosure, the measurement result obtaining module is further configured to:
receive SL-EMR measurement configuration information sent by the network side, before entering into the non-connected state;
obtaining a sidelink early measurement report (SL-EMR) measurement result in a non-connected state includes:
obtaining the SL-EMR measurement result based on the SL-EMR measurement configuration information in the non-connected state.

In some embodiment of the present disclosure, the SL-EMR measurement configuration information includes one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

In some embodiment of the present disclosure, the SL-EMR measurement object information includes identification information of at least one preset relay UE, and the preset relay UE indicated by the identification information of the preset relay UE is measured preferentially.

In some embodiment of the present disclosure, the measurement result obtaining module obtaining the SL-EMR measurement result based on the SL-EMR measurement configuration information in the non-connected state includes:
obtaining the SL-EMR measurement result based on the SL-EMR measurement configuration information before the SL-EMR measurement time timer expires, if the SL-EMR measurement configuration information includes the SL-EMR measurement time timer length information;
obtaining the SL-EMR measurement result based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not include the SL-EMR measurement time timer length information.

In some embodiment of the present disclosure, the measurement result obtaining module is further configured to:
receive a relay discovery instruction sent by the network side, before entering into the non-connected state;
the obtaining the SL-EMR measurement result in the non-connected state includes:
executing the relay discovery instruction and measuring the discovered relay UE, and taking a measurement result as the SL-EMR measurement result in the non-connected state.

In some embodiment of the present disclosure, the measurement result sending module sending the SL-EMR measurement result to the corresponding network side in the connected state includes:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

In some embodiment of the present disclosure, the measurement result sending module is further configured to:
resend, when accessing a new cell, the SL-EMR measurement result to the corresponding network side in the new cell, if a handover or re-establishment occurs during a process of sending the SL-EMR measurement result to the corresponding network side.

In some embodiment of the present disclosure, the measurement result obtaining module is further configured to:
sending SL-EMR measurement support indication information to the network side, before entering into the non-connected state.

FIG.9 is a structural block diagram of a link recovery device in an embodiment of the present disclosure. As shown in FIG9, the device 900 may include: a measurement result receiving module 901 and a multi-path link configuration information determining module 902, where:
a measurement result receiving module 901, configured to receive a sidelink early measurement report (SL-EMR) measurement result sent by the UE, when a UE enters into a connected state;
a multi-path link configuration information determining module 902, configured to, determine, if it is determined based on the SL-EMR measurement result that a multi-path link is to be configured, corresponding multi-path link configuration information based on the SL-EMR measurement result, and send the multi-path link configuration information to the UE, to enable the UE to perform a link recovery based on the multi-path link configuration information.

In some embodiment of the present disclosure, the measurement result receiving module is further configured to:
send SL-EMR measurement configuration information to the UE, before entering into the non-connected state, to enable the UE to obtain the SL-EMR measurement result based on the SL-EMR measurement configuration information when the UE is in a non-connected state.

In some embodiment of the present disclosure, the measurement result receiving module sending SL-EMR measurement configuration information to the UE includes:
carrying the SL-EMR measurement configuration information in a dedicated signaling to send the SL-EMR measurement configuration information to the UE; and/or,
carrying the SL-EMR measurement configuration information in system information to send the SL-EMR measurement configuration information to the UE.

In some embodiment of the present disclosure, the dedicated signaling includes a radio resource control (RRC) connection release message or an RRC reconfiguration message.

In some embodiment of the present disclosure, the system information includes a system information block (SIB) message shared with a Uu-link early measurement report (Uu-EMR) measurement or a separate SIB message.

In some embodiment of the present disclosure, the SL-EMR measurement configuration information is obtained by:
obtaining a relay-related measurement configuration;
obtaining the SL-EMR measurement configuration information based on the relay-related measurement configuration and a network-related measurement configuration.

In some embodiment of the present disclosure, the obtaining the relay-related measurement configuration includes one of the following methods:
sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

In some embodiment of the present disclosure, when the SL-EMR measurement configuration information is carried in an RRC connection release message and sent to the UE, the obtaining the SL-EMR measurement configuration information based on the relay-related measurement configuration and the network-related measurement configuration includes:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

In some embodiment of the present disclosure, the measurement result receiving module is further configured to:
send a relay discovery instruction to the UE, before entering into the non-connected state, to enable the UE to execute the relay discovery instruction and measure a discovered relay node when the UE is in the non-connected state, and take a measurement result as the SL-EMR measurement result.

The device of the embodiments of the present application can execute the method provided by the embodiments of the present application, and the implementation principles are similar. The actions performed by each module in the device of each embodiment of the present application correspond to the steps in the method of each embodiment of the present application. For the detailed functional description of each module of the device, please refer to the description in the corresponding method shown in the previous text, which will not be repeated here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the prior art or all or part of the technical solution can be embodied in the form of a software product. The computer software product is stored in a storage medium, including several instructions to enable a computer device (which can be a personal computer, server, or network device, etc.) or a processor (processor) to perform all or part of the steps of each embodiment method of the present disclosure. The aforementioned storage medium includes: U disk, mobile hard disk, read-only memory (ROM), random access memory (RAM), disk or optical disk, etc. Various media that can store program codes.

It should be noted here that the above-mentioned device provided in the embodiment of the present disclosure can implement all the method steps implemented in the above-mentioned method embodiment, and can achieve the same technical effect. The parts and beneficial effects that are the same as the method embodiment in this embodiment will not be described in detail here.

The embodiment of the present disclosure provides a processor-readable storage medium, where the processor-readable storage medium stores a computer program, and the computer program is used to enable the processor to execute the method of the above embodiment. The processor-readable storage medium may be a non-transitory memory-readable storage medium.

The processor-readable storage medium can be any available medium or data storage device that can be accessed by the processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

The technical solution provided by the embodiments of the present disclosure can be applicable to a variety of systems, especially 5G systems. For example, the applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminal equipment and network equipment. The system may also include a core network part, such as an evolved packet system (EPS), a 5G system (5GS), etc.

The terminal device involved in the embodiments of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device involved in the embodiments of the present disclosure may be a base station, which may include multiple cells that provide services to the terminal. Depending on the specific application scenario, the base station may also be called an access point, or may be a device in the access network that communicates with the wireless terminal device through one or more sectors on the air interface, or other names. The network device may be used to interchange received air frames with Internet Protocol (IP) packets, and serve as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM ) or Code Division Multiple Access (CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be 2D-MIMO, 3D-MIMO, FD-MIMO or massive-MIMO, or it can be diversity transmission, precoding transmission or beamforming transmission, etc.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A link recovery method, applied to a user equipment (UE) side, comprising:
obtaining a sidelink early measurement report (SL-EMR) measurement result in a non-connected state;
sending the SL-EMR measurement result to a corresponding network side to perform a link recovery in a connected state.

2. The method according to claim 1, further comprising:
receiving multi-path link configuration information which is sent by the network side based on the SL-EMR measurement result, and performing the link recovery based on the multi-path link configuration information.

3. The method according to claim 1 or 2, further comprising:
receiving SL-EMR measurement configuration information sent by the network side, before entering into the non-connected state;
the obtaining the SL-EMR measurement result in the non-connected state comprises:
obtaining the SL-EMR measurement result based on the SL-EMR measurement configuration information in the non-connected state.

4. The method according to claim 3, wherein the SL-EMR measurement configuration information comprises one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

5. The method according to claim 4, wherein the SL-EMR measurement object information comprises identification information of at least one preset relay UE, and the preset relay UE indicated by the identification information of the preset relay UE is measured preferentially.

6. The method according to claim 4, wherein the obtaining the SL-EMR measurement result based on the SL-EMR measurement configuration information in the non-connected state comprises:
obtaining the SL-EMR measurement result based on the SL-EMR measurement configuration information before the SL-EMR measurement time timer expires, if the SL-EMR measurement configuration information comprises the SL-EMR measurement time timer length information;
obtaining the SL-EMR measurement result based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not comprise the SL-EMR measurement time timer length information.

7. The method according to claim 1 or 2, further comprising:
receiving a relay discovery instruction sent by the network side, before entering into the non-connected state;
the obtaining the SL-EMR measurement result in the non-connected state comprises:
executing the relay discovery instruction and measuring the discovered relay UE, and taking a measurement result as the SL-EMR measurement result in the non-connected state.

8. The method according to claim 1 or 2, wherein the sending the SL-EMR measurement result to the corresponding network side in the connected state comprises:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

9. The method according to claim 8, further comprising:
resending, when accessing a new cell, the SL-EMR measurement result to the corresponding network side in the new cell, if a handover or re-establishment occurs during a process of sending the SL-EMR measurement result to the corresponding network side.

10. The method according to claim 1 or 2, further comprising:
sending SL-EMR measurement support indication information to the network side, before entering into the non-connected state.

11. A link recovery method, applied to a network side, comprising:
receiving a sidelink early measurement report (SL-EMR) measurement result sent by the UE, when a UE enters into a connected state;
determining, if it is determined based on the SL-EMR measurement result that a multi-path link is to be configured, corresponding multi-path link configuration information based on the SL-EMR measurement result, and sending the multi-path link configuration information to the UE, to enable the UE to perform a link recovery based on the multi-path link configuration information.

12. The method according to claim 11, further comprising:
sending SL-EMR measurement configuration information to the UE before entering into the non-connected state, to enable the UE to obtain the SL-EMR measurement result based on the SL-EMR measurement configuration information when the UE is in a non-connected state.

13. The method according to claim 12, wherein the sending SL-EMR measurement configuration information to the UE comprises:
carrying the SL-EMR measurement configuration information in a dedicated signaling to send the SL-EMR measurement configuration information to the UE; and/or,
carrying the SL-EMR measurement configuration information in system information to send the SL-EMR measurement configuration information to the UE.

14. The method according to claim 13, wherein the dedicated signaling comprises a radio resource control (RRC) connection release message or an RRC reconfiguration message.

15. The method according to claim 13, wherein the system information comprises a system information block (SIB) message shared with a Uu-link early measurement report (Uu-EMR) measurement or a separate SIB message.

16. The method according to claim 12, wherein the SL-EMR measurement configuration information is obtained by:
obtaining a relay-related measurement configuration;
obtaining the SL-EMR measurement configuration information based on the relay-related measurement configuration and a network-related measurement configuration.

17. The method according to claim 16, wherein the obtaining the relay-related measurement configuration comprises one of the following methods:
sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

18. The method according to claim 16, wherein the obtaining the SL-EMR measurement configuration information based on the relay-related measurement configuration and the network-related measurement configuration when the SL-EMR measurement configuration information is carried in an RRC connection release message and sent to the UE comprises:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

19. The method according to claim 11, further comprising:
sending a relay discovery instruction to the UE before entering into the non-connected state, to enable the UE to execute the relay discovery instruction and measure a discovered relay node when the UE is in the non-connected state, and taking a measurement result as the SL-EMR measurement result.

20. A user equipment (UE), comprising a memory, a transceiver, and a processor, wherein:
the memory is configured to store a computer program; a transceiver is configured to send and receive data under a control of the processor; and a processor is configured to read the computer program in the memory to perform:
obtaining a sidelink early measurement report (SL-EMR) measurement result in a non-connected state;
sending the SL-EMR measurement result to a corresponding network side to perform a link recovery in a connected state.

21. The UE according to claim 20, wherein the processor is further configured to perform:
receiving multi-path link configuration information which is sent by the network side based on the SL-EMR measurement result, and performing the link recovery based on the multi-path link configuration information.

22. The UE according to claim 20 or 21, wherein the processor is further configured to perform:
receiving SL-EMR measurement configuration information sent by the network side, before entering into the non-connected state;
the obtaining the SL-EMR measurement result in the non-connected state comprises:
obtaining the SL-EMR measurement result based on the SL-EMR measurement configuration information in the non-connected state.

23. The UE according to claim 22, wherein the SL-EMR measurement configuration information comprises one or more of the following:
SL-EMR measurement object information;
SL-EMR report configuration information;
SL-EMR measurement time timer length information and measurement interval information;
SL-EMR measurement area range information;
a subcarrier spacing of bandwidth part (BWP) where the measurement is performed.

24. The UE according to claim 23, wherein the SL-EMR measurement object information comprises identification information of at least one preset relay UE, and the preset relay UE indicated by the identification information of the preset relay UE is measured preferentially.

25. The UE according to claim 23, wherein the obtaining the SL-EMR measurement result based on the SL-EMR measurement configuration information in the non-connected state comprises:
obtaining the SL-EMR measurement result based on the SL-EMR measurement configuration information before the SL-EMR measurement time timer expires, if the SL-EMR measurement configuration information comprises the SL-EMR measurement time timer length information;
obtaining the SL-EMR measurement result based on the SL-EMR measurement configuration information, or obtaining the SL-EMR measurement result based on the SL-EMR measurement configuration information before a Uu-link early measurement report (Uu-EMR) measurement time timer expires, if the SL-EMR measurement configuration information does not comprise the SL-EMR measurement time timer length information.

26. The UE according to claim 20 or 21, wherein the processor is further configured to perform:
receiving a relay discovery instruction sent by the network side, before entering into the non-connected state;
the obtaining the SL-EMR measurement result in the non-connected state comprises:
executing the relay discovery instruction and measuring the discovered relay UE, and taking a measurement result as the SL-EMR measurement result in the non-connected state.

27. The UE according to claim 20 or 21, wherein the sending the SL-EMR measurement result to the corresponding network side in the connected state comprises:
carrying the SL-EMR measurement result in a radio resource control (RRC) establishment/resume complete message to send the SL-EMR measurement result to the corresponding network side in the connected state; or
sending an RRC establishment/resume complete message carrying SL-EMR measurement result indication information to the corresponding network side in the connected state, to enable the network side to obtain the SL-EMR measurement result based on the SL-EMR measurement result indication information.

28. The UE according to claim 27, wherein the processor is further configured to perform:
resending, when accessing a new cell, the SL-EMR measurement result to the corresponding network side in the new cell, if a handover or re-establishment occurs during a process of sending the SL-EMR measurement result to the corresponding network side.

29. The UE according to claim 20 or 21, wherein the processor is further configured to perform:
sending SL-EMR measurement support indication information to the network side, before entering into the non-connected state.

30. A base station, comprising a memory, a transceiver and a processor, wherein
the memory is configured to store a computer program; a transceiver is configured to send and receive data under a control of the processor; and a processor is configured to read the computer program in the memory to perform:
receiving a sidelink early measurement report (SL-EMR) measurement result sent by the UE, when a UE enters into a connected state;
determining, if it is determined based on the SL-EMR measurement result that a multi-path link is to be configured, corresponding multi-path link configuration information based on the SL-EMR measurement result, and sending the multi-path link configuration information to the UE, to enable the UE to perform a link recovery based on the multi-path link configuration information.

31. The base station according to claim 30, wherein the processor is further configured to perform:
sending SL-EMR measurement configuration information to the UE before entering into the non-connected state, to enable the UE to obtain the SL-EMR measurement result based on the SL-EMR measurement configuration information when the UE is in a non-connected state.

32. The base station according to claim 31, wherein the sending SL-EMR measurement configuration information to the UE comprises:
carrying the SL-EMR measurement configuration information in a dedicated signaling to send the SL-EMR measurement configuration information to the UE; and/or,
carrying the SL-EMR measurement configuration information in system information to send the SL-EMR measurement configuration information to the UE.

33. The base station according to claim 32, wherein the dedicated signaling comprises a radio resource control (RRC) connection release message or an RRC reconfiguration message.

34. The base station according to claim 32, wherein the system information comprises a system information block (SIB) message shared with a Uu-link early measurement report (Uu-EMR) measurement or a separate SIB message.

35. The base station according to claim 31, wherein the SL-EMR measurement configuration information is obtained by:
obtaining a relay-related measurement configuration;
obtaining the SL-EMR measurement configuration information based on the relay-related measurement configuration and a network-related measurement configuration.

36. The base station according to claim 35, wherein the obtaining the relay-related measurement configuration comprises one of the following methods:
sending a first measurement configuration request to a current relay UE connected to the UE, and receiving the relay-related measurement configuration that the current relay UE is to measure and sent by the current relay UE in response to the first measurement configuration request, before the UE enters into the non-connected state;
sending a second measurement configuration request carrying the network-related measurement configuration to the current relay UE, and receiving the relay-related measurement configuration complementary to the network-related measurement configuration and sent by the current relay UE in response to the second measurement configuration request, before the UE enters into the non-connected state; or
receiving the relay-related measurement configuration sent by the current relay UE, before the UE enters into the non-connected state.

37. The base station according to claim 35, wherein the obtaining the SL-EMR measurement configuration information based on the relay-related measurement configuration and the network-related measurement configuration when the SL-EMR measurement configuration information is carried in an RRC connection release message and sent to the UE comprises:
integrating the relay-related measurement configuration and the network-related measurement configuration into a separate field in the RRC connection release message to obtain the SL-EMR measurement configuration information; or,
integrating the relay-related measurement configuration and the network-related measurement configuration into a same set of parameters to obtain the SL-EMR measurement configuration information.

38. The base station according to claim 30, further comprising:
sending a relay discovery instruction to the UE before entering into the non-connected state, to enable the UE to execute the relay discovery instruction and measure a discovered relay node when the UE is in the non-connected state, and taking a measurement result as the SL-EMR measurement result.

39. A link recovery device, comprising:
a measurement result obtaining module, configured to, obtain a sidelink early measurement report (SL-EMR) measurement result in a non-connected state;
a measurement result sending module, configured to send the SL-EMR measurement result to a corresponding network side to perform a link recovery in a connected state.

40. A link recovery device, comprising:
a measurement result receiving module, configured to receive a sidelink early measurement report (SL-EMR) measurement result sent by the UE, when a UE enters into a connected state;
a multi-path link configuration information determining module, configured to determine, if it is determined based on the SL-EMR measurement result that a multi-path link is to be configured, corresponding multi-path link configuration information based on the SL-EMR measurement result, and send the multi-path link configuration information to the UE, to enable the UE to perform a link recovery based on the multi-path link configuration information.

41. A processor-readable storage medium, storing a computer program, wherein the computer program is configured to enable the processor to execute the method according to any one of claims 1 to 19.
